**Europäisches Patentamt**

**European Patent Office**

**Office européen des brevets**

(19)

(11) Publication number : **0 451 862 B1**

# EUROPEAN PATENT SPECIFICATION

(12)

(45) Date of publication of patent specification :
05.07.95 Bulletin 95/27

(51) Int. Cl.⁶ : **G11B 5/848, B05C 11/10**

(21) Application number : **91105870.9**

(22) Date of filing : **12.04.91**

(54) **Method for Applying Magnetic Liquid to a Web by Use of an Extrusion Head with Excess Liquid.**

(30) Priority : **13.04.90 JP 96284/90**

(43) Date of publication of application :
**16.10.91 Bulletin 91/42**

(45) Publication of the grant of the patent :
**05.07.95 Bulletin 95/27**

(84) Designated Contracting States :
**DE FR NL**

(56) References cited :
**DE-A- 3 447 510
US-A- 4 729 858
PATENT ABSTRACTS OF JAPAN vol. 13, no.
569 (C-666) December 15, 1989 & JP-A-1236
968 (FUJI PHOTO FILM ) September 21, 1989**

(73) Proprietor : **FUJI PHOTO FILM CO., LTD.
210 Nakanuma
Minami-Ashigara-shi
Kanagawa (JP)**

(72) Inventor : **Takahashi, Shinsuke, c/o Fuji Photo
Film Co., Ltd.
12-1, Ogicho 2-chome
Odawara-shi, Kanagawa (JP)**
Inventor : **Shibata, Norio, c/o Fuji Photo Film
Co., Ltd.
12-1, Ogicho 2-chome
Odawara-shi, Kanagawa (JP)**

(74) Representative : **Patentanwälte Grünecker,
Kinkeldey, Stockmair & Partner
Maximilianstrasse 58
D-80538 München (DE)**

EP 0 451 862 B1

## Description

## BACKGROUND OF THE INVENTION

The present invention relates to a method for applying a liquid to the surface of a moving web, and more particularly relates to a method by which a magnetic liquid is applied to a long and wide carrier in manufacturing a magnetic recording medium.

Magnetic recording medium are generally manufactured through a process in which a liquid is applied in a desired thickness to the surface of a nonmagnetic flexible band-like carrier continuously moving along a prescribed passage, and thereafter the liquid dried. The process of manufacturing such a medium is fundamentally different from that used for manufacturing a non-application-type magnetic recording medium using ion plating, sputtering, vacuum evaporative deposition or the like.

Most magnetic recording media for audio, video and data use are manufactured using an application-type technique. Although some of such media are manufactured using a gravure method, a reversed roller method, a doctor blade method or the like, many are manufactured using an extrusion-type application method because the media produced using such a method are good in stability and lower in cost. To increase the yield of the product manufactured using the extrusion-type application method, a changeover valve is provided immediately upstream of the extrusion head to switch the passage for the applied liquid passage to return the liquid to a liquid storage tank. Such an arrangement is disclosed in Japanese Unexamined Patent Application No. 117669/87. After the extrusion head is filled with the applied liquid, the changeover valve is manipulated so that the liquid is returned at a prescribed rate to the liquid storage tank to establish a state approximate to that during the actual application of the liquid to a moving carrier. The changeover valve is thereafter appropriately manipulated so that the feed of the liquid to the extrusion head is started or resumed to perform the application. The applied quantity of the liquid to the moving carrier can thus be set at a normal value in a relatively short period at times such as the start of application, the passing of a splicing joint between webs, during temporary stoppage due to some trouble and the resumption of application after elimination of the trouble, or the like, to thereby reduce the uncompleted portion of the product and to thus improve the yield thereof. However, in conventional application methods such as the extrusion-type application method disclosed in above-mentioned Japanese patent application, it is difficult to improve the quality of the product and greatly raise the speed of the application to increase the production rate.

There are various factors which make it difficult to increase the speed of application. The primary factors are that the thickness of the carrier is very small and the applied liquid for forming a ferromagnetic layer has thixotropy, which greatly affects the electromagnetic converting property of the manufactured magnetic recording medium. In an application device in which the passage for the applied liquid for the ferromagnetic layer has a relatively large number of liquid stagnation points, the liquid is likely to undergo an abnormal increase in the viscosity thereof or/and cohesion because of the thixotropy of the liquid, which can greatly change the electromagnetic converting property of the ferromagnetic layer.

It is a further problem that the greater the quantity of liquid discharged from the slot of the application head of a conventional extrusion-type application device, the more likely is the liquid to cohere at and near the end of the extrusion head opposite a liquid feed port for the liquid reservoir of the head, thereby causing a large number of longitudinal streaks in the layer of the applied liquid on the carrier. If the quantity of the discharged liquid is reduced, the number of the longitudinal streaks decreases, but there occurs another problem that chromatic nonuniformity of the layer of the applied liquid on the carrier (caused by nonuniformity of the thickness of the layer) spreads across the entire width of the layer.

The cause of the occurrence of chromatic nonuniformity and that of the occurrence of the longitudinal streaks are believed related to the fact that the flow rate of the liquid in the liquid reservoir in the longitudinal direction of the application head greatly affects the thixotropy of the liquid. More specifically, the causes are believed to be that the viscosity of the liquid in the liquid reservoir at and near the end thereof at the liquid feed port of the extrusion head is likely to drop due to shearing of the liquid, thus resulting in chromatic nonuniformity, and the liquid in the reservoir at and near the other end thereof, at which the flow rate of the liquid drops nearly to zero, is likely to cohere to result in longitudinal streaking.

Accordingly, the present applicants proposed an application method as disclosed in Japanese Unexamined Published Patent Application No. 236968/89. In that method, liquid is continuously discharged from the outlet portion of a slot facing the surface of a continuously moving flexible band-like carrier so that a thin layer of the applied liquid is formed on the surface of the carrier. The method is characterized in that the liquid is supplied into the liquid reservoir of an extrusion head, which communicates with the slot of the head, in such a manner that the supplied quantity of the liquid is larger than the quantity thereof applied to the carrier. A portion of the liquid in the reservoir is forcibly drained therefrom by an external draining device through a drain port provided in or near a position farthest from the end of the reservoir at a feed port therefor.

The problem of it being difficult to precisely set the applied quantity of the liquid and the drained quantity thereof through a drain port because the setting of these quantities is restricted by various factors such as the form of the extrusion head, the conditions of a liquid feed line, and the physical properties of the liquid, which narrows the range of control of the drained quantity of the liquid performed to reduce chromatic nonuniformity and longitudinal streaking, is solved by this method, leading to an improvement of the electromagnetic converting property of the ferromagnetic layer of the applied liquid.

Conventionally, improvements in the yield of the magnetic recording medium and in the quality thereof were attained using mutually different techniques, as mentioned above. Accordingly, the present applicants proposed an application method as disclosed in Japanese Patent Application No. 62274/89 post-published on 26/09/90 employing both techniques so as to produce both effects simultaneously. As a result, a magnetic recording medium improved both in yield and productivity as well as in quality due to reduced chromatic nonuniformity and longitudinal streaking can be manufactured.

However, a further improvement of the productivity and quality of a magnetic recording medium manufactured using an application-type method has been desired in order to enhance the competitiveness of the medium with respect to media manufactured using other methods. Moreover, in the method disclosed in Japanese Patent Application No. 62274/89, it is sometimes difficult to optimize the conditions of application of the liquid to the carrier if the extrusion head is replaced. In other words, the method has a problem that the range of use of the equipment for different application conditions is not wide.

## SUMMARY OF THE INVENTION

The present invention was made in consideration of the above problems. Accordingly, it is an object of the invention to provide a liquid application method by which a high-quality magnetic recording medium of good electromagnetic converting property can be stably manufactured with high yield and high productivity over wider ranges of manufacturing factors than could be tolerated with earlier methods, while preventing chromatic nonuniformity and longitudinal streaking, even if the application head is replaced.

Liquid application method provided in accordance with the present invention, are disclosed in claims 1 and 3.

The liquid application device provided in accordance with the present invention is further characterized in that the flow rate control valves by which the flow rates of the liquid in the bypass and the return passage can be altered, and pressure gauges by which the pressure of the liquid in the bypass and the return passage can be measured are provided in both the bypass and the return passage.

## BRIEF DESCRIPTION OF THE DRAWINGS

Fig. 1 is a schematic view of an application device constructed in accordance with a preferred embodiment of the present invention;
Fig. 2 is a perspective view of the extrusion head of the application device of Fig. 1;
Fig. 3 is a sectional view of the extrusion head;
Fig. 4 is a sectional view of an extrusion head which is a modification of that shown in Fig. 3;
Fig. 5 is a schematic view of an application device which is a modification of that shown in Fig. 1;
Fig. 6 is a schematic view of a conventional application device for a conventional application method;
Fig. 7 is a graph indicating the change in the applied quantity of a liquid; and
Fig. 8 is a graph indicating the change in the application pressure of the liquid.

## DESCRIPTION OF THE PREFERRED EMBODIMENTS

Preferred embodiments of the present invention are hereafter described with reference to the drawings attached hereto.

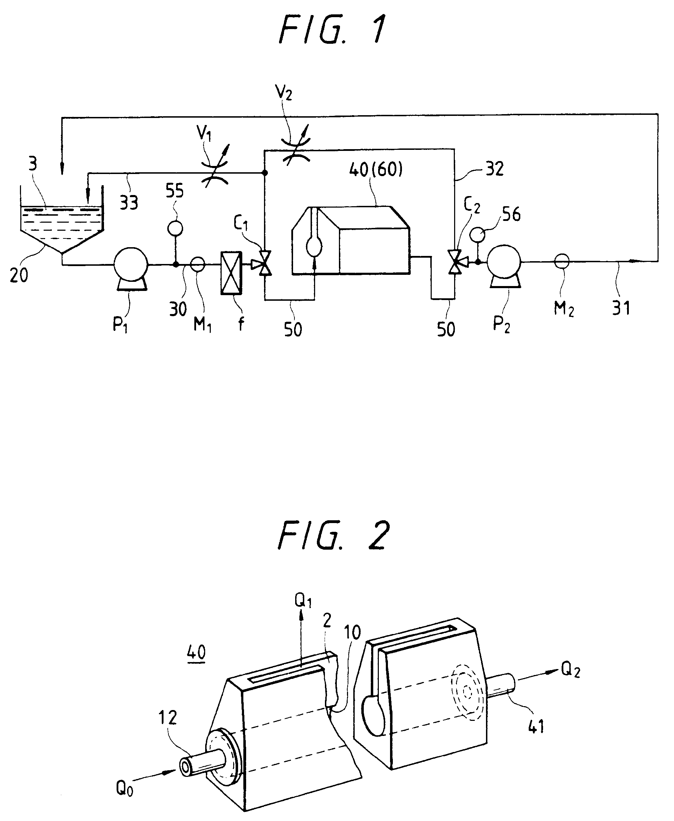

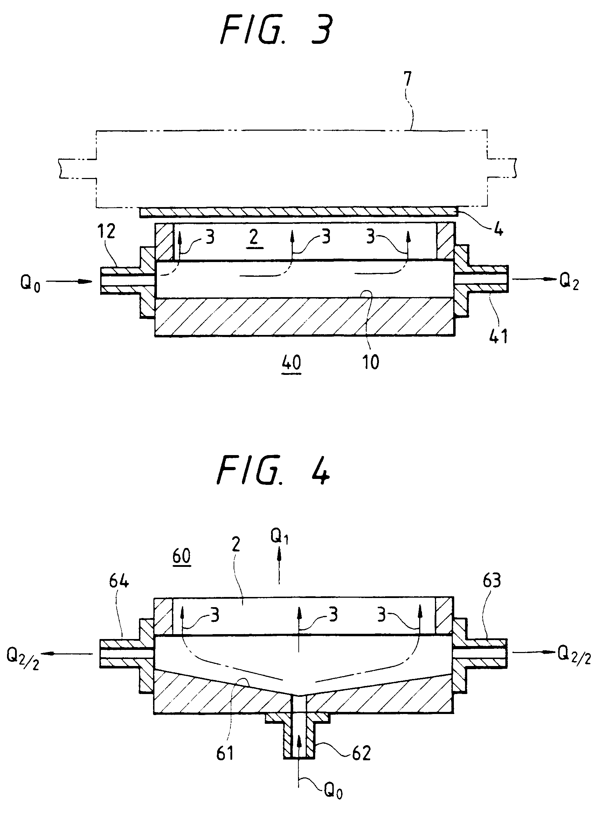

Fig. 1 is a schematic view of an application device constructed in accordance with a preferred embodiment of the invention. Figs. 2 and 3 show the extrusion head of the device.

The construction and operation of the application head 40 of this application device will now be described.

The head 40 is disposed so that the outlet portion thereof can directly contact the surface of a carrier 4 being moved at a prescribed speed while being supported on path rollers. When a liquid 3 is applied to the surface of the carrier 4, the carrier is slightly separated from the outlet portion of the slot 2 of the head 40 by the pressure of the liquid. At that time, the liquid 3 is continuously supplied into the liquid reservoir 10 of the head 40 through a liquid feed pipe 30 and a liquid feed nozzle 12 by a liquid feed pump $P_1$ so that the supplied

quantity $Q_0$ of the liquid to reservoir is larger than the applied quantity to the carrier 4. The distribution of the pressure of the liquid in the reservoir 10, whose depth changes along the length of the reservoir, is such as to obtain a gradient which is uniform along the length of the head.

The excess portion of the liquid 3 in the reservoir 10 is forcibly drained therefrom by an extraction pump $P_2$, which is an external drain device, through a liquid drain nozzle 41 provided at the end of the reservoir opposite the liquid feed nozzle 12 and located farthest from the latter nozzle along the width of the carrier 4.

Fig. 4 shows an application head 60 which is a modification of that shown in Figs. 2 and 3 and which differs therefrom in the position of a liquid feed nozzle 62 and the form of a liquid reservoir 61 whose depth increases from the central portion thereof toward each of the ends thereof. The application head 60 is of the center liquid feed type in which the liquid feed nozzle 62 is located substantially at the center of the length of the head, as a result of which chromatic nonuniformity and longitudinal streaks are less likely to occur than in the application head 40 of the unilateral liquid feed type. To prevent the occurrence of chromatic nonuniformity and longitudinal streaking at and near both ends and the central portion of the liquid reservoir 61, liquid drain nozzles 63 and 64 are provided at both ends of the reservoir 61 to forcibly drain the excess portion of the liquid and to thus render uniform the quality of the layer of applied liquid on the carrier along the width thereof.

Although the liquid drain nozzles 41, 63 and 64 are provided at the ends of the liquid reservoirs 10 and 61, the nozzles may be replaced by liquid drain passages provided in the extrusion heads 40 and 60 near the ends thereof.

Moreover, although Figs. 3 and 4 show the extrusion heads 40 and 60 constructed so that the outlet portions of the slots 2 thereof are located at the tops of the heads, the heads may be arranged so that the outlet portions of the slots are located at the bottoms of the heads if necessary. Each of the outlet portions of the slots 2 of the heads 40 and 60 may also be located to face a backing roller 7, as shown in Fig. 3, wherein the roller is indicated by a dotted line. In such a case, the outlet portion of the slot 2 upwardly faces the surface of the carrier 4, which is moved at the prescribed speed while being supported by the backing roller 7 with a small clearance of about 2 to 5 mm to the surface of the carrier.

The application device including the extrusion head 40 or 60 will now be further described with reference to Fig. 1.

The liquid 3 sent out from a liquid storage tank 20 to the application head 40 or 60 by the liquid feed pump $P_1$ is measured by a first pressure gauge 55. A main passage 50 and a bypass 32 for the liquid 3 can be appropriately changed for each other by a three-way valve $C_1$, which is a first changeover valve, provided immediately upstream of the extrusion head 40 or 60. A return passage 33 for returning the liquid 3 to the liquid storage tank 20 is branched from the bypass 32. A control valve $V_1$ is provided in the return passage 33 to regulate the flow rate of the liquid 3 in the passage. Another three-way valve $C_2$, which is a second changeover valve and operates nearly synchronously with the former three-way valve $C_1$, is provided immediately downstream of the extrusion head 40 or 60 and upstream of the extraction pump $P_2$. A second pressure gauge 56 is provided between the three-way valve $C_2$ and the extraction pump $P_2$ to measure the pressure of the liquid 3 in the main passage 50 during the application of the liquid to the carrier 4 and to measure the pressure of the liquid in the bypass 32 at other times. The liquid 3 drained from the extrusion head 40 or 60 by the extraction pump $P_2$ is returned to the storage tank 20 through a final return passage 31.

An application method of one of the preferred embodiments of the invention is practiced with the application device as will now be described.

After the liquid 3 is filled in the extrusion head 40 or 60, the three-way valves $C_1$ and $C_2$ are synchronously manipulated by electrical signals while the liquid feed pump $P_1$ and the extraction pump $P_2$ are kept in action, so that the liquid flows through the bypass 32 and the return passage 33. A control valve $V_2$ in the bypass 32 is preset nearly at the same degree of opening as that employed during the application of the liquid 3 to the carrier 4.

The pressure of the liquid 3 in the liquid feed pipe 30 is initially coarsely set by adjusting the degree of opening of the control valve $V_1$. After that, the degree of opening of the control valve $V_2$ is finely adjusted while the reading of the second pressure gauge 56 is observed. The pressure of the liquid 3 in the liquid feed pipe 30 is thereafter finely adjusted by setting the degree of opening of the control valve $V_1$ so that the flow rate of the liquid in the bypass 32 and that of the liquid in the return passage 33 are appropriately set.

This regulation is carried out so as to make the flow rate of the liquid 3 in the bypass 32 correspond to that $Q_2$ of the liquid which flows out from the liquid drain nozzle 41 of the application head 40 or the liquid drain nozzles 63 and 64 of the other application head 60 during the application of the liquid to the carrier 4, and the flow rate of the liquid in the return passage 33 is made to correspond to that $Q_1$ of the liquid which flows out from the slot 2 of the application head during application. The adjustment of the degree of opening of the control valve $V_1$ can be referred to as "pseudo" adjustment of the resistance to the discharge of the liquid 3 from the slot 2, that is, of the resistance to the passing of the liquid through the liquid reservoir 10. Because of the ad-

EP 0 451 862 B1

justment of the degree of opening of the control valve $V_1$ before the start of application, the state of the feed of the liquid is made very closely approximate to that during actual liquid application in terms of the resistance to the discharge of the liquid from the slot 2.

Another regulation procedure of the invention will now be described. In this procedure, the liquid 3 is caused to flow through the bypass 32 and the return passage 33, and the control valve $V_1$ in the return passage is preset nearly at the same degree of opening as during application. The pressure of the liquid 3 in the bypass 32 is coarsely set by adjusting the degree of opening of the other control valve $V_2$ while the reading of the second pressure gauge 56 is observed. Subsequently, the degree of opening of the control valve $V_1$ is finely adjusted while the reading of the first pressure gauge 55 is observed. The pressure of the liquid in the bypass 32 is thereafter finely adjusted by the control valve $V_2$ while the reading of the second pressure gauge 56 is observed. As a result, the flow rate of the liquid 3 in the bypass 32 and that of the liquid in the return passage 33 are regulated to be appropriate. The adjustment of the degree of opening of the control valve $V_2$ for the regulation can be referred to as "pseudo" adjustment of the resistance to the passing of the liquid through the liquid reservoir 10, that is, of the resistance to the discharge of the liquid from the slot 2. Because of the adjustment of the degree of opening of the control valve $V_2$ before the start of application, the state of the feed of the liquid is made very closely approximate to that during actual liquid application in terms of the resistance to the discharge of the liquid from the slot 2.

When liquid application is to be started, the three-way valves $C_1$ and $C_2$ are automatically manipulated substantially at the same time (the downstream three-way valve may be manipulated slightly later than the upstream one) so that the liquid 3 is supplied to the extrusion head 40 or 60 to start the application of liquid.

When application is thus started, the flow rate of the liquid 3 discharged from the slot 2 of the head 40 or 60 reaches a desired level in a very short time. The time from the changeover of the flow of the liquid to the bypass 32 by the manipulation of the three-way valves $C_1$ and $C_2$ to the preparatory feed of the liquid to the head and the time from the preparatory feed to the start of the application are so short that the cohesion of the liquid in the extrusion head before the start of the application is negligible. For that reason, even if the carrier 4 is moved very rapidly to apply the liquid 3 thereto at a high speed, the portion of the carrier to which the liquid fails to be applied or fails to be properly applied at the time of the start or resumption of application, and which therefore cannot form a proper product, is greatly reduced.

When the liquid 3 is sent out from the storage tank 20 to the application head 40 or 60 by the liquid feed pump $P_1$, the flow rate of the liquid is measured by a flow meter $M_1$, and the liquid passes through a filter f upstream of the head. At the same time, the excess portion of the liquid in the extrusion head is drained therefrom through the liquid drain nozzle 41 or the liquid drain nozzles 63 and 64 by the extraction pump $P_2$ while the flow rate of the portion is measured by a flow meter $M_2$. As a result, the flow rate $Q_1$ of the liquid 3 discharged from the slot 2 of the extrusion head 40 or 60 and applied to the carrier 4 is equal to the difference $Q_0-Q_2$ between the readings of the flow meters $M_1$ and $M_2$.

It is preferable that the liquid feed pump $P_1$ and the liquid extraction pump $P_2$ move the liquid 3 smoothly and stably. The pumps are not confined to any particular type, but may be of any type. The extraction pump $P_2$ may be a pump for the circulation of the liquid 3, or may be another liquid moving device as far as it acts to extract the liquid from the drain nozzle 41 or the drain nozzles 63 and 64.

In the application method wherein the liquid 3 is forcibly drained from the liquid reservoir of the extrusion head, the flow rate of the liquid in the return passage and that of the liquid in the bypass can be controlled separately from each other to regulate the flow rate $Q_1$ of the applied liquid to the carrier 4 in terms of the resistance to the discharge of the liquid from the slot 2 or the resistance to the passing of the liquid through the liquid reservoir 10, as described above. In other words, the regulation procedure can be appropriately selected depending on the physical properties of the liquid or/and the type of extrusion process to be carried out. For that reason, regulation can be stably performed in a wider range than in the prior processes, making it less likely that chromatic nonuniformity, longitudinal streaking or the like occurs. Thus, regulation can be precisely carried out through not only the adjustment of the extractive power of the extraction pump $P_2$ but also the interrelation of a plurality of factors of the liquid flow line of the application device so that the flow rate of the liquid 3 in the liquid reservoir 10 or 61 of the extrusion head 40 or 60 is rendered uniform throughout the reservoir, the pressure of the liquid in the reservoir is prevented from fluctuating or becoming excessive, good effective flow properties of the liquid are maintained, and the behavior of the liquid discharged from the slot is stabilized. Thus, the states of operation of the liquid feed pump $P_1$ and the liquid extraction pump $P_2$ and the degrees of opening of the control valves $V_1$ and $V_2$ can be appropriately altered to make the ranges of conditions for the feed of the liquid to the extrusion head very wide, without changing the flow rate of the applied liquid to the carrier 4.

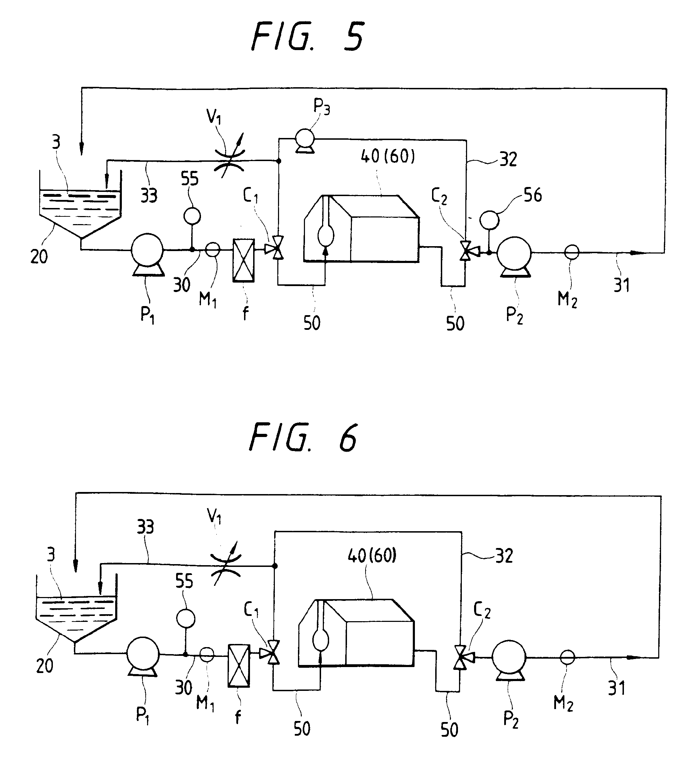

Although the control valves $V_1$ and $V_2$ are provided in the return passage and the bypass in the embodiments described above, the present invention is not confined thereto but may be otherwise embodied so that

5

a booster pump $P_3$ is provided instead of the control valve $v_2$, as shown in Fig. 5, to regulate the flow rate of the liquid by altering the state of operation of the booster pump. Moreover, the other control valve $V_1$ may be replaced by a pump. If the booster pump is a fixed-quantity pump, a small-scale bypass can be provided around the pump so as to increase the adaptability of the pump in the former bypass 32 or the return passage 33.

In the described application methods, the liquid reservoir of an extrusion head is supplied with a liquid at a rate greater than the rate at which the liquid is actually applied, and the excess portion of the liquid is forcibly drained from the reservoir through a drain port provided at an appropriate portion of the reservoir. Also, a bypass connected to changeover valves upstream and downstream of the extrusion head and a return passage branched from the bypass are provided. Flow rate control valves provided in the bypass and the return passage are manipulated so that the extrusion head is filled with the liquid before the start of application thereof to a carrier. The flow rate control valves are thereafter finely adjusted while a liquid feed pump and a liquid extraction pump are kept in action, as if the resistance to the discharge of the liquid from the slot of the extrusion head were adjusted to that to the passing of the liquid through the reservoir or the resistance to the passing of the liquid through the reservoir or the resistance to the passing of the liquid were adjusted to that to the discharge of the liquid, so that the state of the feed of the liquid to the bypass is set to be the same as during the application of the liquid to the carrier. For that reason, the flow rate of the liquid discharged from the slot of the extrusion head at the time of the start of the application reaches a proper level in a very short time, so that the portion of the carrier to which the liquid fails to be applied or fails to be properly applied and which therefore cannot form a proper product is very much reduced.

Since the applied quantity of the liquid can be regulated in terms of the resistance to the discharge of the liquid from the slot or the resistance to the passing of the liquid through the reservoir, the regulation procedure can be appropriately selected depending on the physical properties of the liquid or/and the type of the extrusion head so as to stably control the applied quantity of the liquid in a wider range than was possible with prior techniques, if the extrusion head is replaced in the application device. Thus the degree of freedom in setting the conditions for the application is increased, and the range where chromatic nonuniformity and longitudinal streaking are prevented can be widened. In other words, regulation can be finely performed through not only the adjustment of the extractive power of the liquid extraction pump but also the interrelation of a plurality of factors of the liquid flow lines of the device so as to widen the range of possibility of uniformization of flow rate of the liquid throughout the reservoir, prevent the pressure of the liquid in the reservoir from fluctuating or becoming excessive, maintain good effective flow properties of the liquid, and very effectively stabilize the behavior of the liquid discharged from the slot of the head.

The effects of the present invention will be clarified with reference to Actual Examples thereof and Comparative Examples 1 and 2.

Actual Examples:

Substances as shown in Table 1 were well mixed and dispersed together in a ball mill. 30 parts by weight of an epoxy resin of 500 in epoxy equivalent were added to the mixture and uniformly mixed and dispersed therewith so that a magnetic liquid to be applied was produced.

## Table 1

| | |
|---|---|
| Powder of $\gamma$-$Fe_2O_3$ (spicular grains of 0.5 $\mu$m in mean diameter along major axis and 320 oersted in coercive force) | 300 parts by weight |
| Copolymer of vinyl chloride and vinyl acetate (87:13 in copolymerization ratio and 400 in polymerization degree) | 30 parts by weight |
| Electroconductive carbon | 20 parts by weight |
| Polyamide resin (300 in amine value) | 15 parts by weight |
| Lecithin | 6 parts by weight |
| Silicone oil (dimethyl polysiloxane) | 3 parts by weight |
| Xylol | 300 parts by weight |
| Methyl isobutyl ketone | 300 parts by weight |
| N-butanol | 100 parts by weight |

When the equilibrium viscosity of the magnetic liquid was measured with a rheometer (model RM-1 manufactured by Shimadzu Corporation), the reading of the rheometer was 7 poise at a shearing speed of 10 per second. The magnetic liquid was applied to a carrier of polyethylene terephthalate by the application device shown in Fig. 1 and including the extrusion head 40 shown in Figs. 2 and 3. Table 2 shows the application conditions.

## Table 2

| | |
|---|---|
| Thickness of applied layer on carrier after drying | 5 $\mu$m |
| Thickness of carrier | 20 $\mu$m |
| Width of carrier | 750 mm |
| Speed of application | 200 m/min |
| Gap between carrier and slot | 3 mm |
| Width of slot | 0.5 mm |
| Direction of discharge from slot | Vertical |
| Diameter of liquid reservoir | 10 or 15 mm |
| Supplied quantity $Q_0$ of liquid | 8 $\ell$/min |
| Applied quantity $Q_1$ of liquid | 4 $\ell$/min |
| Drained quantity $Q_2$ of liquid | 4 $\ell$/min |

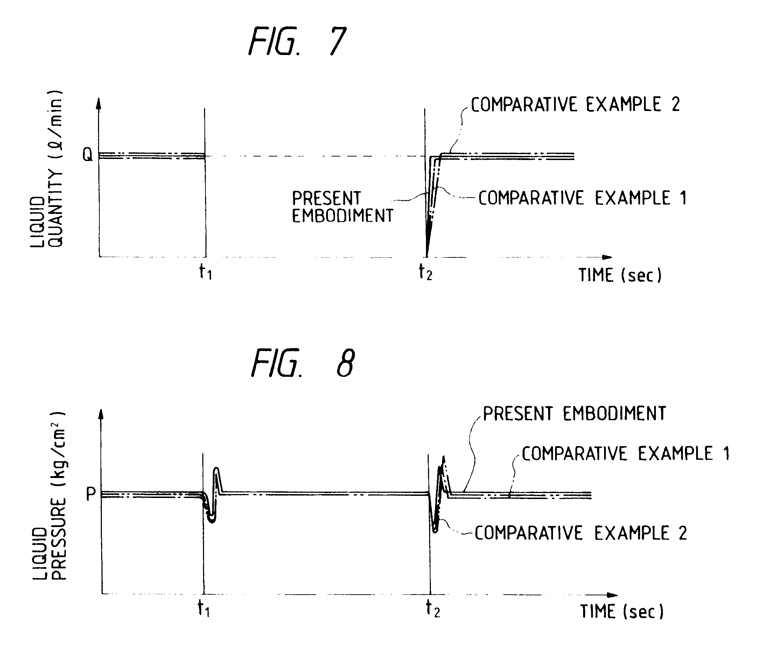

Application was performed using each of two extrusion heads 40 differing from each other in the diameter of the liquid reservoir. Before the start of application, fine adjustment was performed as described above. The three-way valves $C_1$ and $C_2$ were manipulated during the application to once stop the feed of the magnetic liquid to the extrusion head, as shown at a liquid stoppage point $t_1$ in Figs. 7 and 8, and were thereafter manipulated in reverse to resume the application, as shown at a resumption point $t_2$ in Figs. 7 and 8. Application was performed while carrying out five pairs of the above-described manipulations.

Figs. 7 and 8 and Table 3 show the results of the application. The flow rate of the liquid shown in Fig. 7 was measured by the flow meters $M_1$ and $M_2$. The pressure of the applied liquid shown in Fig. 8 was measured by the pressure gauge 56. Although each of the extrusion heads 40 differed from each other in the diameter of the liquid reservoir, the changes in the flow rate of the applied liquid and those in the pressure thereof formed identical flow lines, as shown in Figs. 7 and 8. In other words, there were no changes caused by the differences between the extrusion heads.

Comparative Example 1:

Using the application method disclosed in Japanese Patent Application No. 62274/89, the same magnetic liquid was applied to the same carrier with the same application factors as in the above Actual Examples of the embodiments, using an application device as shown in Fig. 6 and including an extrusion head of 15 mm in the diameter of the liquid reservoir of the head. The flow rate of the liquid in a bypass was regulated by a control valve $V_1$ before the start of application. Three-way valves $C_1$ and $C_2$ were manipulated during the application to once stop the feed of the liquid to the extrusion head 40, as shown at the liquid stoppage point $t_1$ in Figs. 7 and 8, and were thereafter manipulated in reverse to resume the application, as shown at the resumption point $t_2$ in Figs. 7 and 8. Application was performed while performing five pairs of such manipulations.

Figs. 7 and 8 and Table 3 show the results of application. The flow rate of the liquid shown in Fig. 7 was measured by flow meters $M_1$ and $M_2$. The pressure of the applied liquid shown in Fig. 8 was measured by a pressure gauge 55.

Comparative Example 2:

Using the application method disclosed in Japanese Patent Application No. 62274/89, the same magnetic liquid was applied to the same carrier with the same application factors as in the above Actual Examples of the invention by an application device as shown in Fig. 6 and including an extrusion head of 20 mm in the diameter of the liquid reservoir thereof. The same operations were performed as in the case of Comparative Example 1. Figs. 7 and 8 and Table 3 show the results of application.

## Table 3

| Example | Mean length of carrier portion until applied liquid reached prescribed quantity at start of application |
|---|---|
| Actual Examples | 2.5 m |
| Comparative Example 1 | 3 m |
| Comparative Example 2 | 3.2 m |

It is understood from Table 3 and Figs. 7 and 8 that the times which it takes for the applied quantity and pressure of the liquid to reach prescribed levels after the stoppage of the liquid at the liquid stoppage point $t_1$ and the resumption of the feed of the liquid at the resumption point $t_2$ are short. Although the performance of the Actual Examples hardly changed despite the replacement of the extrusion heads, the performance in the case of Comparative Examples 1 and 2 changed significantly due to the replacement of the extrusion heads. This means that the application in the Actual Examples was not affected by the forms of the extrusion heads, but was good and stable over a wide range of conditions.

Observation was performed manually as to chromatic nonuniformity and longitudinal streaking with regard to the Actual Examples and Comparative Examples 1 and 2. Although the results were good as to chromatic nonuniformity and longitudinal streaking for both the Actual Examples and Comparative Examples 1 and 2, the results at and near the resumption point $t_2$ was better for the Actual Examples than the Comparative Examples. This means that the yield of a product manufactured in accordance with the Actual Examples is higher than for products manufactured in accordance with the Comparative Examples.

**Claims**

1. A method for applying a liquid (3) to the surface of a flexible band-like carrier (4) by continuously discharging said liquid from the outlet portion of a slot (2) facing said surface of said carrier while said carrier is moving continuously so that a thin film of said liquid is formed on said surface, wherein:

   a quantity of said liquid ($Q_0$), which is larger than the applied quantity ($Q_1$) of said liquid to said carrier, is supplied, by liquid feed means ($P_1$), into a liquid reservoir (10, 61) of an extrusion head (60, 40) which communicates with said slot;

   a portion ($Q_2$) of said liquid in said reservoir is forcibly drained by liquid drain means ($P_2$) through a liquid drain port (41, 63, 64) provided in or near a position farthest from the position of a liquid feed port (12, 62) for said reservoir along the width of said carrier; the method being characterized by:

   a bypass (32) connected to changeover valves ($C_1$, $C_2$) immediately upstream and downstream of said head, and a return passage (33) branched from said bypass are provided;

   flow rate control valves ($V_1$, $V_2$) are provided in each of said bypass and said return passage;

   said liquid is filled in said head before the start of said application and changeover valves are shifted to prevent supply and drainage to and from said head;

   said liquid is thereafter supplied while said liquid feed means and said liquid drain means are kept in action and said control valve ($V_2$) in said bypass is set nearly at the same degree of opening as during said application;

   the degree of opening of said control valve ($V_1$) in said return passage is then coarsely set while the pressure of said liquid under the action of said liquid feed means is observed;

   the degree of opening of said control valve ($V_2$) in said bypass is then finely adjusted while the pressure of said liquid in said bypass is observed:

   the degree of opening of said control valve ($V_1$) in said return passage is then finely adjusted while the pressure of said liquid in said return passage is observed; and

   said changeover valves are thereafter shifted to supply said liquid to said head to start said application.

2. The method for applying a liquid of claim 1, wherein pressure gauges are provided for permitting the observation of pressures in said return passage and said bypass.

3. A method for applying a liquid (3) to the surface of a flexible band-like carrier (4) by continuously discharging said liquid from the outlet portion of a slot (2) facing said surface of said carrier while said carrier is moving continuously so that a thin film of said liquid is formed on said surface, wherein:

   a quantity of said liquid ($Q_0$), which is larger than the applied quantity ($Q_1$) of said liquid to said carrier, is supplied, by liquid feed means ($P_1$), into a liquid reservoir (10, 61) of an extrusion head (40, 60) which communicates with said slot;

   a portion ($Q_2$) of said liquid in said reservoir is forcibly drained by a liquid drain means ($P_2$) through a liquid drain port (41, 63, 64) provided in or near a position farthest from the position of a liquid feed port for said reservoir along the width of said carrier; the method being characterized by ;

   a bypass (32) connected to changeover valves ($C_1$, $C_2$) immediately upstream and downstream of said head, and a return passage (33) branched from said bypass are provided;

   flow rate control valves ($V_1$, $V_2$) are provided in said bypass and said return passage;

   said liquid is filled in said head before the start of said application and changeover valves are shifted to prevent supply and drainage to and from said head;

   said liquid is thereafter supplied while said liquid feed means and said liquid drain means are kept in action and said control valve ($V_1$) in said return passage is set substantially at the same degree of opening as during said application;

   the degree of opening of said control valve ($V_2$) in said bypass is then coarsely set while the pressure of said liquid in said bypass is observed;

   the degree of opening of said control valve ($V_1$) in said return passage is then finely adjusted while the pressure of said liquid in said return passage is observed, the degree of opening of said control valve ($V_2$) in said bypass is then finely adjusted while the pressure of said liquid in said bypass is observed; and

   said changeover valves are thereafter shifted to supply said liquid to said head to start said application.

**4.** The method for applying a liquid of claim 3, wherein pressure gauges are provided for permitting the obervation of pressures therein, in said return passage and said bypass.

**Patentansprüche**

**1.** Verfahren zum Auftragen einer Flüssigkeit (3) auf die Oberfläche eines flexiblen bandförmigen Trägers (4) durch kontinuierliches Auslassen der Flüssigkeit aus einem Auslaßbereich eines Schlitzes (2), welcher der Oberfläche des Trägers gegenüberliegt, während sich der Träger kontinuierlich bewegt, so daß ein dünner Film aus der Flüssigkeit auf der Oberfläche gebildet wird, wobei:

eine Menge der Flüssigkeit ($Q_0$), welche größer als die auf dem Träger aufgebrachte Menge ($Q_1$) der Flüssigkeit ist, durch Flüssigkeitszufuhreinrichtungen ($P_1$) in ein Flüssigkeitsreservoir (10,61) eines Extrusionskopfes (60,40) zugeführt wird, welcher in Verbindung mit dem Schlitz steht;

ein Anteil ($Q_2$) der Flüssigkeit in dem Reservoir gewaltsam aus einer Flüssigkeitauslaßeinrichtung ($P_2$) durch eine Flüssigkeitsauslaßöffnung (41, 63, 64) ausgelassen wird, welche an oder in der Nähe einer Position bereitgestellt ist, die am weitesten von der Position einer Flüssigkeitszufuhröffnung (12, 62) für das Reservoir entlang der Breite des Trägers entfernt liegt; daß Verfahren ist dadurch gekennzeichnet, daß:

eine Umleitung (32), welche mit Umschaltventilen ($C_1$, $C_2$) unmittelbar stromaufwärts und stromabwärts des Kopfes verbunden ist, und ein Rückflußdurchgang (33), welcher von dieser Umleitung abzweigt, bereitgestellt sind;

Durchflußsteuerventile ($V_1$, $V_2$) in der Umleitung und dem Rückflußdurchgang bereitgestellt sind;

die Flüssigkeit vor dem Beginn der Anwendung in den Kopf eingefüllt wird und die Umschaltventile umgeschaltet werden, um die Zufuhr und das Auslassen zu und aus dem Kopf zu verhindern;

die Flüssigkeit anschließend zugeführt wird, während die Flüssigkeitszufuhreinrichtungen und die Flüssigkeitsauslaßeinrichtungen in Betrieb gehalten werden und das Steuerventil ($V_2$) in der Umleitung im wesentlichen auf das gleiche Maß der Öffnung wie während der Anwendung eingestellt wird;

das Maß der Öffnung des Steuerventils (V1) in dem Rückflußdurchgang anschließend grob eingestellt wird, während der Druck der Flüssigkeit unter der Wirkung der Flüssigkeitszufuhreinrichtungen beobachtet wird;

das Maß der Öffnung des Steuerventils ($V_2$) in der Umleitung genau eingestellt wird, während der Druck der Flüssigkeit in der Umleitung beobachtet wird;

das Maß des Öffnung der Steuerventils ($V_1$) in dem Rückflußdurchgang anschließend genau eingestellt wird, während der Druck der Flüssigkeit in dem Rückflußdurchgang beobachtet wird; und

die Umschaltventile anschließend umgeschaltet werden, um dem Kopf die Flüssigkeit zuzuführen, um die Anwendung zu starten.

**2.** Verfahren zum Auftragen einer Flüssigkeit nach Anspruch, wobei Druckmessgeräte bereitgestellt werden, um die Beobachtung des Drucks in dem Rückflußdurchgang und der Umleitung zu ermöglichen.

**3.** Verfahren zum Auftragen einer Flüssigkeit (3) auf die Oberfläche eines flexiblen bandförmigen Trägers (4) durch kontinuierliches Auslassen der Flüssigkeit aus einem Auslaßbereich eines Schlitzes (2), welcher der Oberfläche des Trägers gegenüberliegt, während sich der Träger kontinuierlich bewegt, so daß ein dünner Film aus der Flüssigkeit auf der Oberfläche gebildet wird, wobei

eine Menge der Flüssigkeit ($Q_0$), welche größer als die auf dem Träger aufgebrachte Menge ($K_1$) der Flüssigkeit ist, durch Flüssigkeitszufuhreinrichtungen ($P_1$) in ein Flüssigkeitsreservoir (10,61) eines Extrusionskopfes (40,60) zugeführt wird, welcher in Verbindung mit dem Schlitz steht;

ein Anteil ($Q_2$) der Flüssigkeit in dem Reservoir gewaltsam aus einer Flüssigkeitauslaßeinrichtung ($P_2$) durch eine Flüssigkeitsauslaßöffnung (41, 63, 64) ausgelassen wird, welche an oder in Nähe einer Position bereit gestellt ist, die am weitesten von der Position einer Flüssigkeitszufuhröffnung für das Reservoir entlang der Breite des Trägers entfernt liegt; das Verfahren ist **dadurch gekennzeichnet**, daß:

eine Umleitung (32), welche mit Umschaltventilen ($C_1$, $C_2$) unmittelbar stromaufwärts und stromabwärts des Kopfes verbunden ist, und ein Rückflußdurchgang (33), welcher von dieser Umleitung abzweigt, bereitgestellt sind;

Durchflußsteuerventile ($V_1$, $V_2$) in der Umleitung und dem Rückflußdurchgang bereitgestellt sind;

die Flüssigkeit vor dem Beginn der Anwendung in den Kopf eingefüllt und die Umschaltventile umgeschaltet werden, um die Zufuhr und das Auslassen von und zu dem Kopf zu verhindern;

die Flüssigkeit anschließend zugeführt wird, während die Flüssigkeitszufuhreinrichtungen und die Flüssigkeitauslaßeinrichtung in Betrieb gehalten werden und das Steuerventil ($V_1$) in dem Rückflußdurchgang im wesentlichen auf das gleiche Maß der Öffnung wie während der Anwendung eingestellt wird; das Maß der Öffnung des Steuerventils ($V_2$) in der Umleitung anschließend grob eingestellt wird, während der Druck der Flüssigkeit in der Umleitung beobachtet wird; das Maß der Öffnung der Steuerventils ($V_1$) in dem Rückführdurchgang anschließend genau eingestellt wird, während der Druck der Flüssigkeit in den Rückflußdurchgang beobachtet wird; das Maß der Öffnung des Steuerventils ($V_2$) in der Umleitung anschließend genau eingestellt wird, während der Druck der Flüssigkeit der Umleitung beobachtet wird; die Umschaltventile anschließend umgeschaltet werden, um dem Kopf die Flüssigkeit zuzuführen, um das Auftragen zu beginnen.

4. Verfahren zum Auftragen einer Flüssigkeit nach Anspruch 3, wobei Druckmessgeräte bereitgestellt werden, um die Beobachtung des Drucks in dem Rückflußdurchgang und der Umleitung zu ermöglichen.

**Revendications**

1. Procédé d'application d'un liquide (3) à la surface d'un organe souple (4) de support en forme de bande par évacuation continue du liquide à la partie de sortie d'une fente (2) tournée vers la surface de l'organe de support alors que l'organe de support se déplace de façon continue afin qu'un film mince du liquide se forme sur ladite surface, dans lequel :

une quantité du liquide ($Q_0$) qui est supérieure à la quantité de liquiae ($Q_1$) appliquée à l'organe de support est transmise, par un dispositif ($P_1$) d'alimentation en liquide, à un réservoir de liquide (10, 61) d'une tête d'extrusion (60, 40) qui communique avec la fente,

une partie ($Q_2$) du liquide du réservoir est évacuée de manière forcée par un dispositif ($P_2$) d'évacuation de liquide par l'intermédiaire d'un orifice (41, 63, 64) d'évacuation de liquide placé en position la plus éloignée de l'emplacement d'un orifice d'alimentation en liquide (12, 62) du réservoir sur la largeur de l'organe de support ou près de cette position, le procédé étant caractérisé en ce que :

une dérivation (32) raccordée à des soupapes de commutation ($C_1$, $C_2$) placées juste en amont et en aval de la tête, et un passage de retour (33) partant de la dérivation sont incorporés,

des soupapes ($V_1$, $V_2$) de réglage de débit sont placées dans chacun des passages de dérivation et de retour,

le liquide remplit la tête avant le début de l'application et les soupapes de commutation sont déplacées afin qu'elles empêchent la transmission à la tête et l'évacuation à partir de la tête,

le liquide est ensuite transmis alors que le dispositif d'alimentation en liquide et le dispositif d'évacuation de liquide sont maintenus en fonctionnement et la soupape de réglage ($V_2$) de la dérivation est réglée à peu près au même degré d'ouverture que pendant l'application,

le degré d'ouverture de la soupape de réglage ($V_1$) du passage de retour est alors réglé de manière grossière alors que la pression du liquide sous l'action du dispositif d'alimentation en liquide est observée,

le degré d'ouverture de la soupape ($V_2$) de réglage de la dérivation est alors ajusté de manière fine lorsque la pression du liquide dans la dérivation est observée, et

le degré d'ouverture de la soupape de réglage ($V_1$) placée dans le passage de retour est alors ajusté de manière fine alors que la pression du liquide dans le passage de retour est observée, et

les soupapes de commutation sont ensuite déplacées afin que le liquide soit transmis à la tête de manière que l'application commence.

2. Procédé d'application d'un liquide selon la revendication 1, dans lequel des jauges de pression sont incorporées afin qu'elles permettent l'observation des pressions dans le passage de retour et dans la dérivation.

3. Procédé d'application d'un liquide (3) à la surface d'un organe (4) de support en forme de bande souple par évacuation continue du liquide par la partie de sortie d'une fente (2) tournée vers la surface de l'organe de support lorsque l'organe de support se déplace de façon continue, si bien qu'une couche mince de liquide est formée à la surface, dans lequel :

une quantité du liquide ($Q_0$) qui est supérieure à la quantité ($Q_1$) de liquide qui est appliquée sur l'organe de support est transmise par le dispositif ($P_1$) d'alimentation en liquide à un réservoir de liquide (10, 61) d'une tête d'extrusion (40, 60) qui communique avec la fente, et

une partie ($Q_2$) du liquide placée dans le réservoir est évacuée à force par un dispositif ($P_2$) d'éva-

cuation de liquide par l'intermédiaire d'un orifice (41, 63, 64) d'évacuation de liquide en position la plus éloignée de la position d'un orifice d'alimentation en liquide du réservoir suivant la largeur de l'organe de support ou près de cette position, le procédé étant caractérisé en ce que :

une dérivation (32) raccordée à des soupapes de commutation ($C_1$, $C_2$) placées immédiatement en amont et en aval de la tête, et un passage de retour (33) partant de la dérivation sont incorporés,

des soupapes ($V_1$, $V_2$) de réglage de débit sont disposées dans la dérivation et le passage de retour,

le liquide remplit la tête avant le début de l'application et les soupapes de commutation sont déplacées afin qu'elles empêchent la transmission à la tête et l'évacuation de la tête,

le liquide est ensuite transmis alors que le dispositif d'alimentation en liquide et le dispositif d'évacuation de liquide sont maintenus en fonctionnement et la soupape de réglage ($V_1$) placée dans le passage de retour est réglée pratiquement au même degré d'ouverture que pendant l'application,

le degré d'ouverture de la soupape de réglage ($V_2$) de la dérivation est alors réglé de manière grossière avec observation de la pression du liquide dans la dérivation,

le degré d'ouverture de la soupape de réglage ($V_1$) dans le passage de retour est alors ajusté de manière fine alors que la pression du liquide dans le passage de retour est observée, le degré d'ouverture de la soupape de réglage ($V_2$) de la dérivation est alors réglé de manière fine alors que la pression du liquide dans la dérivation est observée, et

les soupapes de commutation sont ensuite déplacées afin que le liquide soit transmis à la tête pour le début de l'application.

4. Procédé d'application d'un liquide selon la revendication 3, dans lequel des jauges de pression sont incorporées afin qu'elles permettent l'observation des pressions dans le passage de retour et dans la dérivation.

## FIG. 1

## FIG. 2

# FIG. 3

# FIG. 4

EP 0 451 862 B1

## FIG. 5

## FIG. 6

## FIG. 7

## FIG. 8